Europäisches Patentamt

European Patent Office

Office européen des brevets

(11) Publication number : **0 537 999 A2**

# (12) EUROPEAN PATENT APPLICATION

(21) Application number : 92309347.0

(22) Date of filing : 14.10.92

(51) Int. Cl.⁵ : **C08L 5/00,** C08L 5/04, C08J 9/30, B09B 1/00, C04B 40/00, // (C08L5/00, 89:00), (C08L5/04, 5:00)

(30) Priority : 15.10.91 US 776156

(43) Date of publication of application :
21.04.93 Bulletin 93/16

(84) Designated Contracting States :
CH DE FR GB IT LI NL

(71) Applicant : MERCK & CO. INC.
126, East Lincoln Avenue P.O. Box 2000
Rahway New Jersey 07065-0900 (US)

(72) Inventor : Colegrove, George
5238 Fontaine Street
San Diego, CA 92120 (US)
Inventor : Rakitsky, Walter
7271 Enders Avenue
San Diego, CA 92122 (US)

(74) Representative : Barrett-Major, Julie Diane et al
Merck & Co., Inc. European Patent Department Terlings Park Eastwick Road Harlow Essex CM20 2QR (GB)

(54) Gelled foams.

(57) Stable gel foam compositions which include a gellable polysaccharide such as alginate, xanthan gum, welan gum, or rhamsan gum, a polyvalent ionic complexing agent, a surface active foaming agent such as synthetic or natural organic compounds, and water.

EP 0 537 999 A2

Jouve, 18, rue Saint-Denis, 75001 PARIS

## BACKGROUND OF THE INVENTION

Various air-foam compositions have been described in the art, including air foams for retro-fitting wall cavities with insulation materials, air foams for providing a barrier layer between the atmosphere and deleterious materials including odors and blowing trash from landfills, dust, and noxious fumes from spills, and air foams for treating hazardous materials and other substrates such as those in hazardous waste sites.

Malwitz, US 4,430,840, describes rigid, coarse, closed cell urea-modified foams made from the reaction of a multi-functional isocyanate and a catalytic amount of an isocyanate polymerizing catalyst in the presence of water and a softening agent. The foams are specifically designed for formation in wall cavities of houses.

Kent, et al., US 4,795,590, describes fluid, water-based, aerated or air-entrained, closed cell, low density foam sprayed as a wet, three-dimensional coating to exposed surface of a substrate such as a hazardous waste dump or flammable liquid. The liquid phase of the fluid air foam is a water-soluble surfactant and poly (oxylkylene) polyisocyanate polymer. The foam may also be used as an insulating blanket as an aid in controlling the curing or setting of cementitious materials, such as concrete, mortar, or cement slurries. The foams are non-biodegradable resin foams. Moisture does not easily pass through these foams, and they are difficult to remove from a treated surface by normal washing.

Kittle, US 4,874,641 describes formation of a temporary barrier between a substrate and the atmosphere by applying to the substrate a foam which includes in an approximately 1:1 molar ratio, an anionic surface active sulfate/sulfonate and a carboxylic acid salt. The foams collapse over a period of hours, and are easily washed away.

The present invention provides stable gel foams which act as barriers between the atmosphere and a treated surface. Because of the formation of a tough surface skin, these foams are stable for up to a week, even under moderately severe weather conditions. However, they can be washed away from a tested surface by normal washing.

## SUMMARY OF THE INVENTION

The present invention includes stable gel foam compositions comprising one or more gellable polysaccharides selected from the group consisting of alginate, xanthan gum, welan gum or rhamsan gum, or functionally equivalent derivatives thereof, a polyvalent ionic complexing agent, a surface active foaming agent selected from the group consisting of synthetic or natural organic compounds, and water.

The invention also includes stable gel foam compositions comprising a) one or more gellable polysaccharides selected from the group consisting of natural xanthan gum, welan gum and rhamsan gum, or a polysaccharide combination of alginate with xanthan gum, welan gum or rhamsan gum, or functionally equivalent derivatives thereof, b) a surface active foaming agent selected from the group consisting of synthetic or natural organic compounds, and c) water.

## DETAILED DESCRIPTION OF THE INVENTION

One application of stable gel foams of the present invention is concrete curing.

The current practice in concrete curing is to apply curing compounds as soon as the surface water sheen is lost at the concrete surface. Various types of polymeric latexes are used to produce a film which reduces water loss.

Films of alginate or xanthan gum by themselves do not adhere well to the surface. These films crack and lose moisture unless a hydrophobic compound is added. Addition of protein to a solution generates foams which provide greater coverage per unit weight. The gelled foam forms a barrier which reduces evaporation, providing a moist environment which aids in the curing process and insulates the fresh concrete surface so that cracking does not occur.

Other applications of stable gel foams of the present invention include sealing odor-generating surfaces such as landfills and sewage sludge from the atmosphere, spill containment, and fire fighting.

Gellable polysaccharides useful in the gelled foams of the present invention include alginates, xanthan gum, welan gum, and rhamsan gum, and functionally equivalent derivatives thereof.

Various alginates useful in this invention are described in detail by I.W. Cottrell and P. Kovacs in "Alginates," as Chapter 2 of Davidson, ed., Handbook of Water-Soluble Gums and Resins (1980). Most preferred herein are naturally derived algal sodium alginates, such as those sold commercially under the trademarks KELTEX®, KELGIN® and KELTONE™ by Kelco Division of Merck & Co., Inc.

Alginates also include "bioalgin", microbially produced polysaccharides produced by both Pseudomonas and Azotobacter Strains as described, for example, in Jarman et al., United States patent 4,235,966. These alginates are polysaccharides consisting of a partially acetylated variable block copolymer of D-mannuronic and L-guluronic acid residues. Jarman et al. state that the polysaccharide produced is similar to that produced from seaweed except that the molecule is partially acetylated.

Xanthan gum is the extracellularly produced gum made by the heteropolysaccharide-producing bacterium Xanthomonas campestris by the whole culture fermentation of a variety of conditions of medium comprising a fermentable carbohydrate, a nitrogen source and other appropriate nutrients. Examples of commercially available xanthan gum are "KELTROL® T", "KELTROL® F", "KELZAN® AR" and "KELZAN®", available from Kelco Division of Merck & Co., Inc.

Processes for producing xanthan gum are well known in the art and are described in a number of patents including U.S. Patents Nos. 4,316,012, 4,352,882, 4,375,512, 3,671,398, 3,433,708, 3,271,267, 3,594,280, 3,591,578, 3,391,061, 3,020,206, 3,481,899 and 3,391,060 as well as British Patent No. 1,448,645.

Also useful in this invention is welan gum. Welan gum is a water-soluble polysaccharide produced by the fermentation of Alcaligenes spp. Welan gum is stable over a wide range of viscosities and at temperatures up to about 150°C (300°F). Welan gum is described in U.S. Patent No. 4,342,866. Welan gum is available commercially under the trade designations "K9C324" and "K9C325" and from Kelco Division of Merck & Co., Inc.

Another gum useful in the present invention is rhamsan gum. Rhamsan gum is a microbial polysaccharide also produced from Alcaligenes spp. which is highly pseudoplastic, has a stable viscosity over a range of pH of 2-12 and at temperatures up to about 100°C (212°F) and is compatible with high concentrations of salt. Rhamsan gum is described in U.S. Patent No. 4,401,760. Rhamsan gum is commercially available and sold under the trade designation "K7C233" by Kelco Division of Merck & Co., Inc.

Suitable polyvalent ionic complexes are known polysaccharide crosslinking agents, e.g. aluminum salts, and calcium salts. Particularly suitable salts are calcium sulfate dihydrate and basic aluminum actetate.

Foaming materials or surfactants useful for the present invention include synthetic or natural organic compounds or materials capable of foaming water, and which are compatible with polysaccharides and polyvalent ionic complexing agents of the invention. Suitable surfactants can be nonionic, anionic, or amphoteric, and compatible mixtures thereof. Alternative materials, alone or in combination with the previously mentioned surfactants, are proteinaceous materials.

Classes of surfactants which are useful include: soaps or fatty acid salts such as those having the general formula RCOOM, where R is a fatty aliphatic group and M is an alkali metal, e.g., sodium oleate, laurate, palmitate or stearate; fatty alkyl sulfates, such as those of the general formula $ROSO_2OM$, e.g., sodium octyl, decyl, lauryl, tetradecyl, hexadecyl, heptadecyl, or octadecyl sulfate; salts of alkarylsulfonic acids, such as those of the general formula $RC_6H_4SO_3M$, e.g., sodium octylbenzene sulfonate; ethylene oxide adducts, such as those of the general formula $R(CH_2CH_2O)_nH$ where R is a fatty aliphatic radical, e.g., where R is $C_{10}H_{21}$) to $C_{16}H_{23}O$ and n is 10 to 60; those of the general formula $R(OCH_2CH_2)_nOSO_3M$, where R is a $C_{10}$ to $C_{18}$ alkyl, n is 1 to 3, and M is sodium: and salts of dialkyl sulfosuccinic acids, e.g., sodium dioctyl sulfosuccinate. Also see Encyclopedia of Chemical Technology, Kirk-Othmer, 3rd Edition, Vol. 22, pages 347-387, John Wiley & Sons (1983) for other surfactants useful in this invention. Many of these surfactants are biodegradable, making the foams of this invention made therefrom particularly advantageous where their biodegradability is desired, e.g. in treating municipal waste sites and sanitary landfills or in protecting combustible material from fire. European Publication 206,548A discloses a host of fluoroaliphatic surfactants, e.g. $C_8F_{17}SO_3K$,

$C_6F_{13}SO_2N(CH_2CH(OH)CH_2SO_3^-)$

$C_3H_6N^+(CH_3)_2C_2H_4OH$, and

$C_6F_{13}SO_2N(C_3H_6SO_3^-)-C_3H_6N^+(CH_3)_2C_2H_4OH$,

which can likewise be used in this invention. Fluoroaliphatic surfactants can be used in this invention alone or in combination as mixtures, and they can be used in combination with the hydrocarbon surfactants.

FULL-EX concentrate, a surfactant blend made by Ansul Fire Protection (Marinette, WI), is a suitable surfactant mixture for purposes of the present invention.

Proteins which particularly useful as surface active agents include commercially available proteins such as hydrolyzed soy protein (e.g., Versa Whip 500, A. E. Staley). Hydrolyzed animal proteins, such as hydrolyzed collagen, may also be used (e.g. Polypro 5000 and Polypro 15000, Geo. A. Hormel & Co., Austin MN).

Preferably, when the gellable polysaccharide is alginate, the complexing agent is a calcium salt and the surfactant is sodium lauryl sulfate. More preferably, the composition includes a sequestrant such as sodium hexametaphosphate. Foam made from these ingredients, with water, preferably comprise about 0.3% to about 1.0% alginate.

Preferably, when the gellable polysaccharide is xanthan gum, the foam formulation contains a salt such as a basic aluminum acetate and optionally a sequestrant for aluminum ion such as sodium citrate to delay gelation when such control is desired. Xanthan gum is used in amounts preferably between between about 0.25% and about 1.0%, more preferably between about 0.4% and about 0.7%. Basic aluminum acetate is preferably used in amounts between about 0.15% and about 0.3%

In another embodiment of the invention, protein is present as a foaming agent, in the foaming compositions, and the polysaccharide is xanthan gum, welan gum or rhamsan gum. Solutions of these polysaccharides in combination with proteins are stable until the solution pH is lowered below the isoelectric point of the protein. Therefore, it is possible to formulate dry blends of polysaccharides, proteins, and a compound which slowly reduces the pH to a level where reaction occurs. These systems are preferred for landfill operations.

Preferably, the compound which slowly reduces the pH is glucono-delta lactone, which initially lowers the pH slightly when added to water, then further hydrolyzes to produce more acidity. The compound can be dry blended with polysaccharides and hydrolyzed foaming proteins to produce solutions which have delayed reactivity. The foaming properties of the protein are therefore utilized first, followed by reactivity with the polysaccharide in the continuous phase.

Applicants have found that the polysaccharide used in combination with proteins must produce solutions having the rheology suitable for stabilizing the foam while the lactone is slowly hydrolyzing. Xanthan gum, welan gum and rhamsan gum, each of which produce pseudoplastic solutions, are therefore preferred.

These compositions preferably contain between about 0.25% and about 1.0% xanthan gum, welan gum or rhamsan gum, in combination with a foaming type protein (e.g. hydrolyzed vegetable or animal protein) or a condensate type of protein which is recommended for foaming and also in combination with an acid generating compound in solution. The preferred concentration of the acid generating compound is that which is sufficient to slowly reduce the pH to below 5.0.

Preferably, the preferred compound glucono delta lactone is present in an amount between about 0.1% and about 0.5%.

An even more preferred system involves welan gum as the polysaccharide and soy protein e.g. (Versa Whip 500 (A.E. Staley)) as the foaming agent. With this system there is no need to add an acid generating compound to lower pH and obtain stability because stability exists at neutral pH. This preferred system is a dry blend which requires no pH adjustment and which is extremely convenient to apply in both landfill operations and cement curing procedures. The system avoids gelation prior to foaming, and allows an aqueous system to be prepared and preserved with a biocide.

The amount of welan gum used in these welan gum/soy protein systems is between about 0.25% and 1.0%, preferably about 0.3% and 0.6%. The amount of soy protein used in these welan gum/soy protein systems is between about 0.25% and 1.0%, preferably about 0.3% and 0.6%.

The gelled foam may be generated according to standard foam generating procedures known in the art. An aqueous solution or dispersion comprising i)gellable polysaccharide, selected from the group consisting of alginate, xanthan gum, welan gum or rhamsan gum or functionally equivalent derivatives thereof, ii) water soluble polyvalent ionic complexing agent which crosslinks the polysaccharide, iii) a surface active foaming agent selected from the group consisting of synthetic or natural organic compounds, and iv) water, is aerated to form an aerated or air-entrained, low density foam (air foam). Air foam is understood by those skilled in the art as a foam made by physically miring air into a liquid, and is distinct from chemical foam, carbon dioxide foam and halocarbon blown foam. The air foam is conveniently formed by mechanically or physically entraining or dispersing air in the starting aqueous solution or dispersion, e.g. by pumping the solution to air-aspirating, foam-producing equipment. The equipment used is not particularly energy intensive or expensive and can be conventional or easily-modified conventional equipment, e.g. pumps, valves, regulators, mixers, tanks, hoses and foam-generating nozzles such as air-aspirating or air-injecting nozzles, etc., the operation of which can be carried out without specialized labor. The gelled or viscous foam can be formed in a time-controlled manner from the fluid foam, which is particularly meaningful when the fluid foam is applied to a vertical or inclined surface.

Foams may be generated, for example, using an SKG mini-mixer which consists of one dual continuous mixing head having two rotors and two stators. Air is delivered by a compressed air bottle with a regulator. The mixing head is driven by a variable speed motor. Aqueous solutions or dispersions mentioned above are pumped through the mixing head where the air is incorporated to generate the foam.

Air-foams of the present invention can be applied to target surfaces according to procedures known in the art.

Kramer et al., US 4,519,338, describe air apparatus for sealing dumped waste which includes a roller for compacting the waste and a spray apparatus for spraying foam in a swath. Kittle et al., US 5,011,330 describe an alternative apparatus for laying down a foam on a waste disposal landfill which delivers the foam through an elongated manifold at the rear of a vehicle.

The following examples illustrate gelled foam formulations of the invention, processes for preparing gelled foams of the invention, and uses for gelled foams of the invention. "Expansion ratio" is a comparative measurement of air foam volume:liquid solution volume.

4

EXAMPLE 1

Alginate based gel foams

Systems based on alginates may be either liquid systems, where the calcium salt is added last, or dry blends, where all the components are blended and added to water to dissolve the alginate just prior to foaming. In this example, the dry blend contained fine mesh, high viscosity sodium alginate, calcium sulfate dihydrate, sodium hexametaphosphate, and sodium lauryl sulfate. The following formulations were prepared (amounts shown in grams):

|  | a | b |
|---|---|---|
| Sodium alginate | 10 | 400 |
| Calcium sulfate | 2.2 | 88 |
| Sodium lauryl sulfate | 2.0 | 80 |
| Sodium hexametaphosphate | 0.4 | 32 |
| Water | 1985.4 | (20 gallons) |

Formulation "a" dry materials were blended, added to water, and mired fifteen minutes. The solution was placed in a foam generator which produced a foam expansion ratio of about 6:1. The foam gelled upon standing outdoors in a tray and produced a surface film.

Formulation "b" dry materials were blended, added to water, mixed ten minutes, and pumped through a Huskey 715 Transfer Pump using compressed air at 30 psi to mix the solution with air and form a foam having an expansion ratio of about 5:1. The foam gelled within 10 minutes and remained stable for more than 7 days.

Both formulations formed an observable skin which limits evaporation. The skin resists mechanical deformation, such as might be caused by wind.

EXAMPLE 2

Alginate based gel foams

The same procedure and amounts used in Example 1b were used in this example, except that sodium lauryl sulfate was replaced with 800 ml FULL-EX concentrate. The resulting expansion ratio was 6:1. The gel formed slowly but was stable for more than 7 days. A foam skin was observed.

EXAMPLE 3

Xantham gum based gel foams

Systems based on ranthan gum are prepared in combination with basic aluminum acetate and Fullex® protein foam concentrate. The following formulation (amounts are shown in grams unless otherwise indicated)

| Xanthan gum | 10.0 |
|---|---|
| FULL-EX Concentrate | 20ml |
| Basic aluminum acetate | 5.0 |
| Water | 1965 |

is prepared by first dissolving the xanthan gum in water containing Fullex® protein foam concentrate, and then adding the basic aluminum acetate with rapid agitation. The mixture was then placed in a foam generator which produced a foam with an expansion ratio of about 8:1. The foam gelled rapidly and produced a foam-surface film after about 15 minutes.

Example 3a

The procedure of Example 3 was used to generate a gelled foam having the formulation shown below (amounts shown are in grams unless otherwise indicated)

| | |
|---|---|
| Xanthan gum | 10.0 |
| FULL-EX Concentrate | 20ml |
| Basic aluminum acetate | 5.0 |
| Sodium citrate | 1.0 |
| Water | 1964 |

The presence of sodium citrate delayed gelation, but a gelled foam similar to the one produced in Example 3 was formed.

Example 3b

The following formulation (amounts in grams unless otherwise indicated)

| | |
|---|---|
| Xanthan gum | 400 |
| FULL-EX Concentrate | 800ml |
| Basic aluminum acetate | 120 |
| Water | 20 gal. |

was prepared in solution and then sprayed through a Huskey pump onto an open field. The expansion ratio was 7:1. The foam subsequently gelled and formed a tough skin on its surface which resisted evaporation of the liquid. Parts of the foam having a depth of about two inches were very stable, resisting the drying effect of sunlight and low humidity for about seven days. Thinner portions of the foam (e.g. less than an inch) were stable for about three days.

EXAMPLE 3c

Solutions containing 0.5% xanthan gum and 0.2% Versa Whip 510 (a food grade modified soy protein from A.E. Staley Manufacturing Co.) were prepared with and without the addition of 0.15% glucono-delta lactone. The solutions were foamed in a Kitchen Aid mixer with wire whip to an expansion ratio of 8:1 and placed outdoors for stability testing. The foam without lactone collapsed within a day while the foam containing the lactone was stable for four days, at times in direct sunlight, and a good skin was formed on the surface which resisted evaporation.

EXAMPLE 4

Following the procedure in Example 3c, solutions having the same composition except for replacement of xanthan gum with 0.4% welan gum were prepared. The foam with lactone was stable for four days, at times in direct sunlight, and a good skin was formed on the surface which resisted evaporation.

EXAMPLE 4a

The following foam formulation was prepared:

|  | Grams |
|---|---|
| Welan gum | 5 |
| Soy protein (Versa Whip 500) | 5 |
| Water | 990 |

Five grams of welan gum and five grams soy protein were dry blended, then added to water to form solutions. The solutions were foamed in a Kitchen Aid mixer with wire whip to an expansion ratio of 10.5:1. and applied in a six inch layer. The foam lasted 10 days under cloudy conditions, and 7 days in direct sunlight. A good skin formed on the surface and resisted evaporation.

The invention also includes xanthan gum, welan gum and/or rhamsan gum in an alginate gelled foam system to stabilize the system while the alginate gel is forming slowly.

EXAMPLE 5

A dry blend of the following materials and final gel system weight percentages is prepared.

|  | % wt. |
|---|---|
| Sodium alginate (KETONE®LV) | 0.75% |
| Xanthan gum (KELZAN) | 0.25% |
| Glucono-delta-lactone | 0.35 |
| Soy protein (Versa Whip 500) | 0.60 |
| Dicalcium phosphate (anhydrous) | 0.43 |

The system was dissolved in water at the above concentrations and whipped to an expansion ratio of 7:1. When applied in a layer two inches deep, the foam was stable for four days with the xanthan gums but only 1.5 days without.

In the above system the lactose hydrolyzes slowly to reduce the pH which dissolves the dicalcium phosphate which then reacts with the alginate to form a gel.

The gelled foams of the present invention are useful for concrete curing, whereby the foam is applied to concrete surface to provide a stable moisture barrier during concrete curing. The foam provides a layer of moisture to the concrete surface and keeps the concrete surface at a near saturation level, allowing the concrete to completely cure. The foam provides insulation from the sun, reducing water evaporation, and minimizes thermal gradients to which fresh concrete might otherwise be subjected.

The gelled foams of the present invention are also useful for sealing landfills. The compacted working face of a sanitary landfill, instead of being covered with dirt, can be covered with foam prepared according to the present invention. Such landfills generally have a rough, irregular surface resulting from normal landfill operations using heavy earthmoving equipment.

Over an extended period of time, the foam cover remains as applied with no evidence of flowing or discontinuities. New added waste can be placed on top of the foam, crushing the foam, and reusing the air space previously occupied by the foam. Wet foam acts as a trap for blowing trash, which adheres to the foam and which is buried during the next operation.

The gelled foams can also be used for sealing sewage sludge by applying the foam to the sludge surface. Other uses include minimizing dusty conditions, e.g. during mineral transport in mining operations; carrying suspended particles through a pipeline; as agricultural foam markers; and preventing tree or ground freezing during periods of cold weather, by applying directly to the tree or ground.

**Claims**

1. A gelled foam composition comprising:
   a) one or more gellable polysaccharides selected from the group consisting of natural algal or microbially produced alginate, xanthan gum, welan gum or rhamsan gum, or functionally equivalent derivatives thereof;

b) a polyvalent ionic complexing agent;

c) a surface active foaming agent selected from the group consisting of synthetic or natural organic compounds; and

d) water.

2. A foam composition of claim 1 wherein the polysaccharide is 0.3 to 1.0% algal alginate, the polyvalent ionic complexing agent is a calcium salt, and the surface active foaming agent is sodium lauryl sulfate.

3. A foam composition of claim 1 wherein the polysaccharide is 0.25% to 1.0% xanthan gum, welan gum or rhamsan gum, the polyvalent ionic completing agent is aluminum acetate, and the surface active agent is protein.

4. A foam composition of claim 1 wherein the polysaccharide is 0.25 to 1.0% welan gum and the surface active agent is hydrolyzed soy protein.

5. A gelled foam composition comprising:

a) one or more gellable polysaccharides selected from the group consisting of natural xanthan gum, welan gum, and rhamsan gum, or a polysaccharide combination of alginate with xanthan gum, welan gum or rhamsan gum, or functionally equivalent derivatives thereof,

b) a surface active foaming agent selected from the group consisting of synthetic or natural organic compounds, and

c) water.

6. A foam composition of claim 5 wherein the polysaccharide is 0.25 to 1.0% welan gum and the surface active agent is hydrolyzed soy protein.

7. A process for producing a gelled foam composition comprising:

a) adding a mixture of i) a gellable polysaccharide selected from the group consisting of alginate, xanthan gum, welan gum or rhamsan gum, ii) a polyvalent ionic complexing agent, and iii) a surface active agent selected from the group consisting of synthetic or natural organic compounds to water;

b) dissolving the components to form a solution;

c) introducing air to the solution; and

d) agitating the solution to generate foam.

8. A process for covering a landfill comprising applying a foam composition as claimed in any one of claims 1 to 6 to the surface of the landfill.

9. A process for curing cement compositions comprising pouring the cement composition and applying a foam composition as claimed in any one of claims 1 to 6 to the surface of the cement.